(19) **Europäisches Patentamt / European Patent Office / Office européen des brevets**

(11) **EP 1 248 704 B1**

(12) # FASCICULE DE BREVET EUROPEEN

(45) Date de publication et mention de la délivrance du brevet:
**27.04.2011 Bulletin 2011/17**

(21) Numéro de dépôt: **00960763.1**

(22) Date de dépôt: **30.08.2000**

(51) Int Cl.:
*B32B 17/10* (2006.01)  *B60J 1/17* (2006.01)
*C03C 27/12* (2006.01)

(86) Numéro de dépôt international:
**PCT/FR2000/002405**

(87) Numéro de publication internationale:
**WO 2001/017769 (15.03.2001 Gazette 2001/11)**

(54) **INTERCALAIRE ET VITRAGE FEUILLETE COMPORTANT LEDIT INTERCALAIRE**

ZWISCHENSCHICHT UND VERBUNDGLASSCHEIBE MIT DIESER ZWISCHENSCHICHT

INTERLAYER AND LAMINATED GLASS PANEL COMPRISING SAME

(84) Etats contractants désignés:
**AT BE CH CY DE DK ES FI FR GB GR IE IT LI LU MC NL PT SE**

(30) Priorité: **03.09.1999 FR 9911047**

(43) Date de publication de la demande:
**16.10.2002 Bulletin 2002/42**

(73) Titulaire: **SAINT-GOBAIN GLASS FRANCE**
**92400 Courbevoie (FR)**

(72) Inventeur: **BORDEAUX, Frédéric**
**60200 Compiegne (FR)**

(74) Mandataire: **Cardin, Elise**
**Saint-Gobain Recherche**
**39, quai Lucien Lefranc**
**93300 Aubervilliers Cedex (FR)**

(56) Documents cités:
**EP-A- 0 852 999     WO-A-98/26927**
**DE-A- 19 632 616     DE-A- 19 639 350**
**DE-C- 19 705 586     US-A- 4 642 255**
**US-A- 5 147 485**

- **PATENT ABSTRACTS OF JAPAN vol. 009, no. 247 (C-307), 3 octobre 1985 (1985-10-03) & JP 60 103055 A (TEIJIN KK), 7 juin 1985 (1985-06-07)**

**EP 1 248 704 B1**

**Description**

L'invention concerne des intercalaires utilisés pour la réalisation de vitrages feuilletés destinés à équiper des véhicules automobiles. De tels vitrages sont habituellement constitués de deux feuilles de verre séparées l'une de l'autre par un intercalaire plastique, tel qu'une feuille de polyvinylbutyral (PVB).

Plus particulièrement, bien que l'invention ne soit pas limitée à de telles applications, elle s'applique à des vitrages latéraux associés à des systèmes de "montée-baisse" définissant un mouvement coulissant desdits vitrages dans les portes des véhicules automobiles.

Habituellement, de tels vitrages latéraux sont constitués d'une feuille de verre dite de "sécurité", c'est-à-dire répondant au règlement européen n° 43. De tels vitrages présentent des faiblesses en ce qui concerne la sécurité propre du véhicule. En effet, il est possible de briser de tels vitrages et de pénétrer à l'intérieur du véhicule soit pour voler le véhicule, soit pour dérober des objets ou accessoires dans l'habitacle.

Depuis plusieurs années, se sont développés des systèmes anti-vol soit sous forme d'alarme sonore, soit qui permettent d'immobiliser le véhicule. Si de tels systèmes peuvent éventuellement éviter le vol du véhicule, ils sont bien souvent inefficace contre la simple effraction par bris de vitrage pour voler des objets laissés dans l'habitacle.

Pour répondre et prévenir ce type d'effraction, il a déjà été proposé d'utiliser des vitrages feuilletés, constitués par exemple de deux feuilles de verre séparées par un intercalaire plastique, tels que mentionnés précédemment.

L'utilisation de tels vitrages feuilletés est avantageuse pour répondre au problème de l'inviolabilité. En effet, la présence de la feuille plastique complique énormément la casse du vitrage ; dans le cas d'un vitrage feuilleté comportant deux feuilles de verre séparées l'une de l'autre par une feuille de PVB, lors de la casse d'une ou des deux feuilles de verre, la structure feuilletée reste en place, les feuilles de verre brisées restant solidaires de l'intercalaire.

Toutefois, dans le cas d'une tentative d'effraction, durant laquelle un individu tente à l'aide d'un outil de briser le vitrage feuilleté par des coups répétés, il est possible d'observer une déformation du vitrage telle que les bords de celui-ci se libèrent des montants latéraux dans lesquels il est enchâssé. Ceci est plus particulièrement vrai dans le cas de vitrages ouvrants tels que ceux qui coulissent selon une direction verticale dans les portes de véhicules automobiles ; en position fermée, les parties latérales et la partie haute du vitrage ne sont pas fixées au cadre de porte, mais enchâssées dans les rails de guidage et la partie haute du cadre. Une force de pression importante et répétée à l'aide d'un outil contondant, tel qu'une massue ou une batte de base-ball, peut ainsi conduire à la déformation du vitrage, celui-ci se cintrant, et le libérer du cadre de porte sur au moins l'un de ses côtés. Il ne reste plus alors qu'à pousser ou tirer le vitrage pour libérer une ouverture vers l'enceinte du véhicule.

Pour Limiter ou retarder la déformation d'un tel vitrage, lorsque l'un ou les deux verres sont cassés, il a déjà été envisagé d'utiliser une couche intercalaire rigide qui présente une résistance à la flexion importante et donc s'oppose au cintrage du vitrage. Mais de tels intercalaires présentent des épaisseurs importantes qui les rendent incompatibles avec les applications considérées ou tout au moins nécessitent une modification très importante des cadres de porte. Les inventeurs se sont ainsi donnés pour mission la réalisation d'un intercalaire constitué d'au moins un film plastique mou, par opposition aux intercalaires rigides évoqués précédemment, en vue de la réalisation d'un vitrage feuilleté pouvant être utilisé comme vitrage automobile dans des structures habituelles, ledit intercalaire conférant une amélioration de la résistance à la déformation du vitrage, ou en d'autres termes, une amélioration de sa "rigidité résiduelle".

Ce but est atteint selon l'invention par un intercalaire pour la réalisation de vitrages feuilletés, constitués d'au moins deux feuilles de polyvinylbutyral (PVB), un renfort étant inséré entre lesdites deux feuilles de PVB, ledit renfort conférant à l'intercalaire une résistance à la traction telle que l'énergie élastique nécessaire pour déformer l'intercalaire en traction ($Et_r$) est d'au moins 80 J/m$^2$, selon toutes les directions dans le plan de l'intercalaire.

De préférence, cette énergie élastique $Et_r$ est supérieure à 120 J/m$^2$.

Cette énergie élastique nécessaire pour déformer l'intercalaire en traction, qui illustre la résistance à la traction de l'intercalaire, s'exprime de la façon suivante :

$$Et_r = \frac{\sigma_e^2 \cdot x}{2\,Y} \qquad (I)$$

avec $\sigma_e$ : limite élastique en traction du renfort,
Y : module d'Young,
x : section du renfort par unité de longueur.

L'énergie élastique $Et_r$ d'une feuille de PVB possédant une épaisseur standard pour la réalisation de vitrages feuilletés destinés à des applications automobiles, est très faible et quasiment égale à 0 J/m$^2$.

Contrairement aux techniques envisagées jusqu'à présent, l'intercalaire présente une résistance à la flexion quasi-inexistante et pourtant permet de limiter la déformation du vitrage feuilleté cassé lorsqu'une pression est exercée sur celui-ci, du fait du renforcement de sa résistance à la traction, ou plus précisément, de la valeur plus élevée de l'énergie élastique nécessaire pour déformer l'intercalaire en traction.

En effet, durant leurs études, les inventeurs ont su mettre en évidence que dès que la casse de la feuille de verre apparaît, il y a formation d'au moins deux morceaux ou fragments de verre dans la zone où la force s'exerce. La limite ou ligne séparant ces deux morceaux devient un lieu de flexion permettant la déformation du vitrage. Or dès que cette déformation intervient, les deux morceaux de verre prennent appui l'un sur l'autre, ce qui entraîne, l'intercalaire restant solidaire des feuilles de verre, une sollicitation dudit intercalaire en traction selon au moins une direction et non pas seulement en flexion.

Selon la variante de réalisation de l'invention revendiquée le renfort inséré entre les feuilles de PVB est constitué de fils tels que des fils de verre ou des fils nylon, disposés selon au moins deux directions, par exemple pour former un quadrillage ou grille.

Dans le cas d'un tel renfort le paramètre x intervenant dans la formule $Et_r$ (I) est tel que $x = \Pi.r^2 .n$ :

Avec r : rayon du fil

n : nombre de fils présente par unité de longueur.

Selon une autre variante , le renfort inséré entre les feuilles de PVB est constitué d'un film polyester, tel qu'un film polyéthylène-téréphtalate (PET) d'une épaisseur supérieure à 70 $\mu$m.

Selon cette variante le paramètre x intervenant dans la formule $Et_r$ (I) est égal à l'épaisseur de la feuille ou film du renfort.

L'utilisation d'un film polyéthylène-téréphtalate présente notamment l'avantage de posséder une résistance à la traction qui reste élevée dans un large domaine de température, au moins jusqu'à 50°C.

Avantageusement, le renfort est constitué de l'association d'au moins deux films polyester. Ce mode de réalisation permet notamment de conserver une bonne développabilité du renfort sous forme de film, lorsque l'on veut augmenter l'épaisseur dudit film pour améliorer encore la résistance à la traction. En effet, une augmentation de l'épaisseur d'un tel film augmente sa rigidité et rend moins certaine sa développabilité, notamment dans le cas où le vitrage présente une sphéricité importante. L'association ou combinaison de deux films conduit sensiblement au même renfort en terme de résistance à la traction qu'un film présentant une épaisseur égale à la somme des épaisseurs des deux films en question et chacun des films conservant une développabilité compatible avec des vitrages présentant des sphéricités éventuellement très prononcées.

De préférence encore, dans le cas de deux films polyesters associés l'un à l'autre, ceux-ci sont séparés par une feuille de PVB qui assure une bonne cohésion de l'ensemble.

L'invention propose également un vitrage feuilleté constitué d'au moins deux feuilles de verre et d'un intercalaire tel que décrit précédemment présentant une résistance à la traction telle que l'énergie élastique nécessaire pour le déformer en traction soit d'au moins 80 J/m$^2$, selon toutes les directions dans le plan dudit intercalaire.

Un tel vitrage feuilleté comporte donc deux feuilles de verre qui forment les surfaces extérieures du vitrage et entre lesquelles l'intercalaire peut être constitué de deux feuilles de PVB entre lesquelles un renfort constitué de fils est inséré.

Le vitrage comporte avantageusement deux feuilles de verre, de sorte que le vitrage selon l'invention présente d'une part une bonne résistance à la déformation dans le cas, tel que décrit précédemment, d'une force de poussée, exercée par un outil contondant, par exemple sur la feuille de verre formant la surface extérieure du vitrage installé dans le cadre d'une ouverture ; et d'autre part, un tel vitrage permet également de présenter une résistance à la déformation satisfaisante dans le cas d'une force de traction exercée sur le vitrage, par exemple à l'aide d'un outil qui après avoir traversé le vitrage, prend appui sur la feuille de verre intérieure et peut permettre d'exercer une force de traction entraînant une déformation du vitrage. Dans ce dernier cas, la feuille de verre intérieure se brise et ce sont les morceaux de verre issus de cette feuille de verre qui prenant appui l'un sur l'autre transforme l'effort exercé sur le vitrage par l'intermédiaire de l'outil en une force de traction qui s'exerce sur l'intercalaire.

Un vitrage feuilleté comportant deux feuilles de verre permet donc une meilleure défense contre des tentatives d'effraction puisqu'il permet de résister à des forces qui s'exercent en poussée ou en traction, la direction des forces étant la même, c'est-à-dire sensiblement perpendiculaire au plan tangent au vitrage au point où s'exerce ladite force.

Selon des variantes de l'invention, un tel vitrage feuilleté équipe la ou les parties latérales d'un véhicule automobile et il est monté mobile. En effet, la nécessité d'offrir une résistance à la déformation du vitrage, les feuilles de verre étant brisées, est d'autant plus importante que les feuilles de verre ne sont pas solidaires du cadre, par exemple par collage, mais simplement enchâssées sur au moins les parties latérales dans les montants du cadre de la baie obturée par ledit vitrage. Un tel montage permet effectivement de sortir le vitrage de son emplacement en cas de déformation du vitrage, celui-ci n'étant pas tenu sur ses parties latérales.

Selon une autre variante de réalisation, le vitrage est bombé selon au moins une direction.

Selon une réalisation préférée de l'invention, les feuilles de verre présentent une épaisseur comprise entre 1 et 3 mm. Pour des épaisseurs inférieures, il apparaît que l'effet d'appui des morceaux de verre les uns sur les autres, lorsque la feuille de verre est brisée, n'apparaît que sous certaines conditions de bris. Au-delà de 3 mm, le vitrage feuilleté selon l'invention est satisfaisant, mais dans le cas de vitrages destinés à l'automobile, il est alors nécessaire de modifier les cadres de porte où sont installés les vitrages, du fait de l'épaisseur, lesdits cadres étant aujourd'hui prévus pour des vitrages non feuilletés.

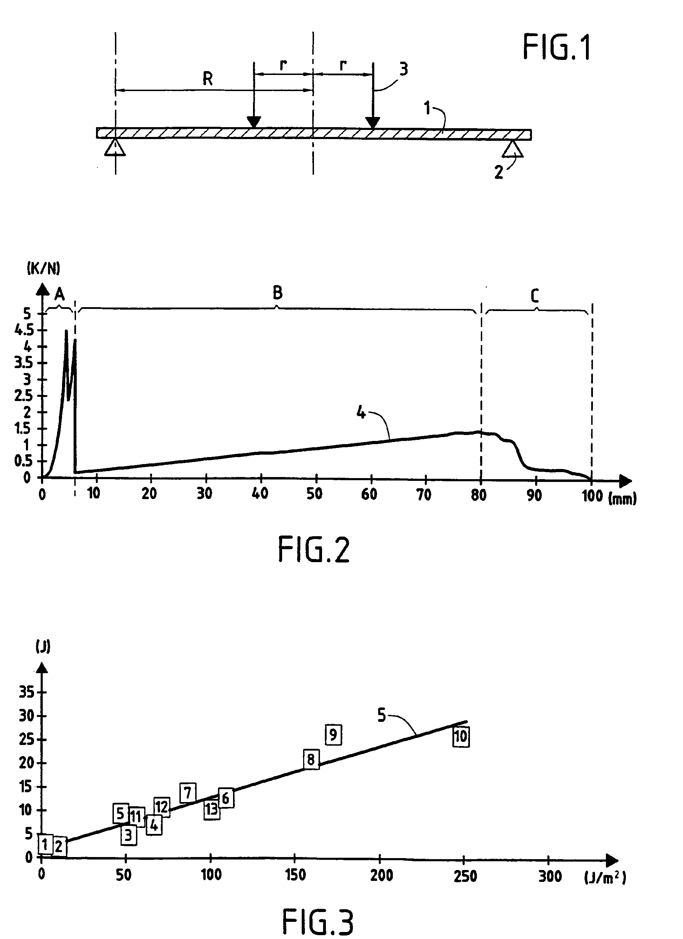

D'autres détails et caractéristiques avantageuses de l'invention ressortiront ci-après de la description des exemples de réalisations et d'essais comparatifs, en référence aux figures 1, 2 et 3 qui représentent :

↪ figure 1 : le dispositif d'essai pour des sollicitations en flexion,
↪ figure 2 : un exemple de mesure obtenue selon cet essai,
↪ figure 3 : les résultats présentés sous forme de graphique illustrant l'énergie nécessaire pour déformer un vitrage feuilleté cassé selon l'invention, en fonction de l'énergie élastique par unité de surface nécessaire pour déformer l'intercalaire en traction.

Les essais réalisés ont consistés à fabriquer des vitrages feuilletés selon des techniques connues et à mesurer leur résistance en flexion ou rigidité résiduelle, afin de mettre en évidence l'efficacité de l'invention.

Les premiers essais ont consisté à réaliser des vitrages feuilletés constitués de deux feuilles de verre de 2,1 mm d'épaisseur, séparés par deux feuilles de PVB (polyvinylbutyral) de 0,38 mm d'épaisseur, entre lesquelles est inséré le renfort.

Des tests de flexion ont ensuite été réalisés sur une machine INSTRON 1204. Les tests consistent en une sollicitation en flexion circulaire bi-axiale d'échantillons carrés de largeur 300 mm. Le dispositif utilisé est représenté sur la figure 1. Ce dispositif consiste à déposer le vitrage 1 sur un support annulaire 2, présentant un rayon R (137,5 mm) et à venir exercer une pression au centre du vitrage 1 à l'aide d'un anneau 3, présentant un rayon r (87,5 mm), celui-ci agissant concentriquement au support annulaire 2. La vitesse de déplacement de l'anneau 3 est de 5 mm/mn. Les essais sont réalisés à température ambiante.

Durant l'essai, on mesure la force exercée par l'anneau 3 sur le vitrage en fonction du déplacement dudit anneau selon l'axe vertical. Un exemple de résultat est illustré sur la figure 2, qui représente une courbe 4 présentant la force, exprimée en kN, exercée sur le vitrage 3, en fonction du déplacement de l'anneau 3, exprimé en millimètre. Cette courbe 4 fait apparaître trois domaines A, B et C. Le domaine A concerne les casses successives des deux feuilles de verre. Le domaine B illustre la déformation du vitrage feuilleté cassé, et le domaine C débute par le déchirement ou la rupture de l'intercalaire.

Dans l'analyse de l'invention, seul le domaine B, lié à la rigidité résiduelle du vitrage feuilleté et à la résistance à la déformation de l'intercalaire présente un intérêt ; ce domaine B correspond à un déplacement de l'anneau 3 entre 8 et 80 mm dans le cas de l'exemple illustré sur la figure 2. Les inventeurs ont considéré que le paramètre important retenu pour comparer les rigidités résiduelles de différents vitrages feuilletés comportant différents types d'intercalaire ou plus exactement différents types de renfort, est l'énergie nécessaire pour déformer le vitrage cassé de 8 à 18 mm. La valeur de 18 mm a été choisie pour déterminer une valeur suffisamment représentative de l'énergie de déformation.

Cette énergie qui correspond à l'aire sous la courbe 4 entre les abscisses 8 et 18 s'exprime de la façon suivante :

$$E = \int_8^{18} F.dl \qquad (II)$$

Avec F : exprimé en kN,
l : exprimé en mm,
E : exprimé en J.

Différents vitrages feuilletés ont été réalisés, et pour chacun d'eux, une mesure selon la technique illustrée sur la figure 1 a été effectuée pour déterminer la rigidité résiduelle en flexion de ces vitrages.

Le tableau qui va suivre présente les valeurs d'énergie, E, nécessaires pour déformer le vitrage, calculé selon les résultats obtenus et la formule (II) pour des vitrages feuilletés comportant différents types de renfort.

Les renforts des différents vitrages testés sont les suivants :

| N ° RENFORT | NATURE DU RENFORT |
|---|---|
| 1 | Aucun (on a donc un intercalaire constitué de 0,76 mm de PVB) |

(suite)

| N ° RENFORT | NATURE DU RENFORT |
|---|---|
| 2 | Film de verre de 0,1 mm |
| 3 | Film de verre de 0,7 mm |
| 4 | Film de verre de 1 mm |
| 5 | Film PET d'une épaisseur de 50 $\mu$m |
| 6 | Film PET d'une épaisseur de 80 $\mu$m |
| 7 | Film PET d'une épaisseur de 100 $\mu$m |
| 8 | Film PET d'une épaisseur de 150 $\mu$m |
| 9 | 2 films PET d'une épaisseur de 80 $\mu$m séparés par une feuille PVB de 0,38 mm |
| 10 | Film PET d'une épaisseur de 240 $\mu$m |
| 11 | Mèches de 200 fibres de verre de diamètre 9 $\mu$m, réparties selon deux directions perpendiculaires avec un espacement de 10 mm |
| 12 | Mèches de 200 fibres de verre de diamètre 9 $\mu$m, réparties selon deux directions perpendiculaires avec un espacement de 7,5 mm |
| 13 | Mèches de 200 fibres de verre de diamètre 9 $\mu$m, réparties selon deux directions perpendiculaires avec un espacement de 5 mm |

Le tableau qui suit présente en outre la valeur $Et_r$ (énergie élastique de traction nécessaire pour déformer l'intercalaire) et les différentes caractéristiques permettant son calcul par la formule (I) :

| N° RENFORT | E (J) | $\sigma_e$, (MPa) | Y (MPa) | X (mm) | $Et_r$ (J/m$^2$) |
|---|---|---|---|---|---|
| 1 | 2,9 | - | - | - | - |
| 2 | 2,7 | 100 | 73000 | 0,10 | 6,8 |
| 3 | 4,8 | 100 | 73000 | 0,70 | 47,9 |
| 4 | 7,2 | 100 | 73000 | 1,00 | 68,5 |
| 5 | 8,6 | 80 | 3000 | 0,05 | 53,3 |
| 6 | 13,7 | 80 | 3000 | 0,08 | 85,3 |
| 7 | 12,2 | 80 | 3000 | 0,10 | 106,7 |
| 8 | 20,6 | 80 | 3000 | 0,15 | 160 |
| 9 | 25,3 | 80 | 3000 | 0,16 | 170,7 |
| 10 | 25,1 | 80 | 3000 | 0,24 | 256 |
| 11 | 6,7 | 2400 | 73000 | 0,00127 | 50,2 |
| 12 | 7,7 | 2400 | 73000 | 0,0017 | 66,9 |
| 13 | 11 | 2400 | 73000 | 0,0025 | 100,4 |

La valeur $Et_r$ ainsi que celle des différents paramètres du premier essai ne sont pas indiquées car les caractéristiques mécaniques du PVB, qui est un matériau visco-élastique dépendent de la température et du temps.

Une analyse rapide de la première colonne montre à l'évidence que l'insertion d'un renfort entre les deux feuilles de PVB, dont la particularité est d'améliorer la résistance à la traction de l'intercalaire, confère au vitrage feuilleté une énergie nécessaire pour déformer le verre cassé de 8 à 18 mm, et donc une rigidité résiduelle, améliorée.

Par ailleurs, sur la figure 3, on a tracé les points de la fonction f telle que $E = f(Et_r)$ correspondant aux essais 1 à 13, c'est-à-dire que l'on a tracé une représentation graphique de l'énergie nécessaire pour déformer le verre cassé en flexion (E) en fonction de l'énergie élastique ($Et_r$) nécessaire pour déformer l'intercalaire en traction. Les différents points sont représentés par le numéro du renfort inscrit dans un rectangle. Il s'avère comme l'illustre la figure 3 que cette fonction f est sensiblement linéaire, comme le montre la droite 5, et donc que l'énergie E ou plus exactement la rigidité résiduelle est essentiellement fonction de l'énergie $Et_r$ et donc de la résistance à la traction de l'intercalaire et plus exactement du renfort.

La valeur minimale de 80 J/m$^2$ selon l'invention correspond environ à une énergie de déformation en flexion du vitrage feuilleté de 10 J, qui correspond déjà à une énergie significative apportée par un outil contondant venant frapper un vitrage de dimension standard installé dans le cadre d'une porte, lorsqu'il est manié par un individu de corpulence moyenne.

D'autres essais ont consisté à faire varier l'épaisseur des deux feuilles de verre formant les surfaces extérieures des vitrages feuilletés.

Ces essais ont montré que des épaisseurs trop faibles, c'est-à-dire inférieures à 1 mm conduisent à des résultats qui ne sont plus en accord avec l'invention. Les inventeurs expliquent ces résultats par le fait que les morceaux de verre issus de la casse des verres ne sont pas suffisamment épais pour prendre appui les uns sur les autres et convertir la force conduisant à une flexion du vitrage en une force de traction exercée sur l'intercalaire dans le plan de celui-ci.

**Revendications**

1. Intercalaire pour la réalisation de vitrages feuilletés constitués d'au moins deux feuilles de polyvinylbutyral (PVB), entre lesquelles est inséré un renfort tel que l'énergie élastique nécessaire pour déformer l'intercalaire en traction ($Et_r$) soit au moins 80 J/m$^2$ selon toutes les directions dans le plan de l'intercalaire, **caractérisé en ce que** le renfort est constitué de fils tels que des fils de verre ou nylon, disposés selon au moins deux directions.

2. Vitrage feuilleté constitué d'au moins deux feuilles de verre et d'un intercalaire selon la revendication 1.

3. Vitrage feuilleté selon la revendication 2, *caractérisé en ce qu'*il équipe la partie latérale d'un véhicule automobile *et* *en ce qu'*il est mobile.

4. Vitrage feuilleté selon l'une des revendications 2 ou 3, *caractérisé en ce qu'*il est bombé selon au moins une direction.

5. Vitrage feuilleté selon l'une des revendications 2 à 4, *caractérisé en ce que* les feuilles de verre présentent une épaisseur comprise entre 1 et 3 mm.

**Claims**

1. Interlayer for producing laminated glazing consisting of at least two sheets of polyvinyl butyral (PVB), between which a reinforcement is inserted such that the elastic energy ($Et_r$) needed to deform the interlayer in tension is at least 80 J/m$^2$ in all directions, in the plane of the interlayer, **characterized in that** the reinforcement consists of yarns, such as glass or nylon yarns, arranged in at least two directions.

2. Laminated glazing consisting of at least two glass sheets and of an interlayer, according to Claim 1.

3. Laminated glazing according to Claim 2, *characterized in that* it is fitted into the side of a motor vehicle *and in that* it can be moved.

4. Laminated glazing according to either of Claims 2 and 3, **characterized in that** it is curved in at least one direction.

5. Laminated glazing according to one of Claims 2 to 4, *characterized in that* the glass sheets have a thickness of between 1 and 3 mm.

**Patentansprüche**

1. Abstandshalter für die Herstellung von Verbundgläsern, die aus wenigstens zwei Scheiben aus Polyvinylbutyral (PVB) bestehen, zwischen denen eine Verstärkung eingefügt ist, welche derart ist, dass die für die Zugverformung

(Et$_r$) des Abstandshalters erforderliche elastische Energie wenigstens 80 J/m$^2$ entlang aller Richtungen in der Ebene des Abstandshalters ist, **dadurch gekennzeichnet, dass** die Verstärkung aus Fäden, wie Glas- oder Nylonfäden besteht, die entlang wenigstens zweier Richtungen angeordnet sind.

2. Verbundglas, das aus wenigstens zwei Glasscheiben und einem Abstandshalter nach Anspruch 1 besteht.

3. Verbundglas nach Anspruch 2, **dadurch gekennzeichnet, dass** es den Seitenteil eines Kraftfahrzeugs ausstattet und dass es beweglich ist.

4. Verbundglas nach einem der Ansprüche 2 oder 3, **dadurch gekennzeichnet, dass** es in wenigstens einer Richtung gewölbt ist.

5. Verbundglas nach einem der Ansprüche 2 bis 4, **dadurch gekennzeichnet, dass** die Glasscheiben eine Dicke im Bereich zwischen 1 und 3 mm aufweisen.

FIG.1

FIG.2

FIG.3